# EUROPÄISCHE PATENTSCHRIFT

(11) **EP 3 672 813 B1**
(45) Veröffentlichungstag und Bekanntmachung des Hinweises auf die Patenterteilung: **07.07.2021**
(21) Anmeldenummer: 18725781.1
(22) Anmeldetag: 08.05.2018
(51) Int. Cl.: B60C 11/16

(54) **SPIKE ZUM VERANKERN IN EINEM SPIKELOCH EINES LAUFSTREIFENS EINES FAHRZEUGLUFTREIFENS UND FAHRZEUGLUFTREIFEN MIT SPIKES**
SPIKE FOR ANCHORING IN A SPIKE HOLE OF A TREAD STRIP OF A PNEUMATIC TIRE AND PNEUMATIQUE TIRE WITH SUCH SPIKES
CRAMPON POUR L'ANCRANGE DANS UN TROU DANS LA BANDE DE ROULAGE D'UN PNEUMATIQUE ET PNEUMATIQUE AVEC DES CRAMPONS

(30) Priorität: 24.08.2017 DE 102017214868
(43) Veröffentlichungstag der Anmeldung: 01.07.2020
(73) Patentinhaber: Continental Reifen Deutschland GmbH, 30165 Hannover (DE)
(72) Erfinder: SCHLITTENHARD, Jan, 30900 Wedemark (DE); KÖTTER, Maik, 30451 Hannover (DE); SPECHTMEYER, Torben, 30451 Hannover (DE)
(74) Vertreter: Continental Corporation
(86) Internationale Anmeldenummer: PCT/EP2018/061758
(87) Internationale Veröffentlichungsnummer: WO 2019/037900

(56) Entgegenhaltungen:
- WO-A1-2017/088995
- JP-U- H0 671 210
- RU-C1- 2 152 318

## Beschreibung

Die Erfindung betrifft einen Spike zum Verankern in einem Spikeloch eines Laufstreifens eines Fahrzeugluftreifens, mit einem Spikekörper aus Gummi, einem zumindest zum Teil innerhalb des Spikekörpers befindlichen Basisteil aus einem Fußflansch und einem Pinhalter, in welchem ein Spikepin verankert ist, welcher mit einem Endabschnitt den Spikekörper und bei im Laufstreifen eingesetzten Spike die Laufstreifenoberfläche überragt, wobei der Endabschnitt von einer Gummischicht umgeben ist und der Fußflansch mit einer Gummischicht umhüllt ist, wobei der Fußflansch und der Pinhalter jeweils Teile mit einer in Draufsicht ovalen bzw. annähernd ovalen Gestalt sind, wobei das Oval des Pinhalters gegenüber dem Oval des Fußflansches um 90° verdreht ist und wobei der Fußflansch in Draufsicht eine Mittenbreite und der Pinhalter eine Länge und eine Breite aufweisen. Die Erfindung betrifft ferner einen Fahrzeugluftreifen mit Spikes.

Spikes werden üblicherweise durch eine Kombination aus Formschluss und Klemmung in den Spikelöchern des Laufstreifens von Fahrzeugluftreifen gehalten. Herkömmliche Spikes bestehen üblicherweise aus einem Spikekörper aus Aluminium oder Stahl, in welchem der über die Laufstreifenoberfläche vorstehende Spikepin, der aus Hartmetall besteht, gehalten ist.

Es ist üblich, auf winterlichen Fahrbahnen zur Erhöhung der Verkehrssicherheit Streugut zu verwenden. Der Einsatz von Sand wurde in den letzten Jahren zugunsten von Streusplitt reduziert, da Sand dazu neigt, von Reifen zu Staub oder zu Feinstaub zermahlen zu werden, welcher zum Schutz der Gesundheit der Bevölkerung reduziert oder vermieden werden soll. Der Einsatz von Streusplitt führt jedoch dazu, dass die üblichen, in Fahrzeugluftreifen vorhandenen Spikes verstärkt abgenutzt werden, insbesondere wenn ihr Spikekörper aus Aluminium besteht.

Es ist daher bereits vorgeschlagen worden, Spikes mit Spikekörpern aus Gummi zu verwenden. So sind beispielsweise aus der gattungsbildenden WO 2017/088995 A1 Spikes bekannt, bei welchen der Spikepin und/oder der Fußflansch zumindest abschnittsweise in einen Gummimantel bzw. in Gummimaterial integriert ist bzw. sind. Aus der WO 2017/088995 sind Ausführungsvarianten von Spikes bekannt, die einem Spike der eingangs genannten Art entsprechen. Die besonderen Vorteile dieser Ausführungen liegen in den grundsätzlichen Materialeigenschaften des Gummikörpers. Durch seine geringe Dichte von ca. 1g/cm³ ist Gummi im Vergleich zu Aluminium und Stahl besonders leicht. Der Austausch von Aluminium und Stahl durch Gummi als Körpermaterial führt zu einer Reduktion des Spikegewichts, welche sich besonders positiv auf den Straßenverschleiß und auf die Feinstaubbildung auswirkt. Der Straßenverschleiß wird hauptsächlich durch die Aufschlagenergie des Spikes bestimmt. Die elastischen Materialeigenschaften des Gummis haben noch weitere Vorteile. Zum einen dämpft das elastische Körpermaterial Stöße, sodass geringere Kräfte auf Steine in der Straßenoberfläche oder auf Streugutpartikel wirken. Somit werden auch dadurch der Straßenverschleiß und die Feinstaubbildung reduziert. Des Weiteren sind Spikekörper aus Gummi jenen aus Aluminium oder Stahl im Abriebverhalten überlegen, da sie ein komplett anders Verschleißverhalten aufweisen. Werden Steine des Straßenbelags und insbesondere Splitt von Streugut in der Nähe eines konventionellen Spikes vom Reifen überrollt, so verformt sich das Profil im Laufstreifen sehr stark und "weicht" zur Seite aus. Der fixierte, starre Spike kann dieser "Ausweichbewegung" nicht folgen. Dadurch bildet sich ein Spalt zwischen Spike und Gummi, welcher somit die Ober- und Mantelfläche des Spikekörpers dem abrasiven Angriff der Steine aussetzt. Da Steine im Straßenbelag und Splitt üblicherweise eine höhere Härte als Aluminium und sogar als Stahl aufweisen, wird der Spikekörper sehr stark abgeschliffen, wodurch sich die Spikekörperhöhe und der Durchmesser des Spikekörpers verringern. Dies führt dazu, dass die Spikelochkanten einem schneidenden Abrieb ausgesetzt sind. Sie erodieren, wodurch sich der Spalt zwischen Spike und umliegender Gummimatrix vergrößert. Dies begünstigt das Eindringen von Sand und kleineren Steinen, wodurch der Spikekörperabrieb weiter beschleunigt wird. Als Folge davon reduzieren sich die seitlichen Haltekräfte auf den Spike, was zu einer Reduktion der Wintereigenschaften durch starkes Verkippen, im schlimmsten Fall zum Spikeverlust, führt.

Ferner ist aus der JP H06 71210 U ein Fahrzeugluftreifen mit einem mit Spikes versehenen Laufstreifen bekannt. Die Spikekörper der Spikes sind von einer Gummischicht umgeben, welche an ihrer Außenseite mit einem Haftmittel versehen ist.

Die RU 2 152 318 C1 offenbart einen Spike mit einem in Draufsicht annähernd ovalen Fußflansch mit einer in Längserstreckung des Fußflansches ausgerichteten Symmetrieebene, zwei parallel zur Symmetrieebene verlaufenden Seitenflächen und zwei diese Seitenflächen miteinander verbindenden, bogenförmigen Stirnflächen.

Der Erfindung liegt die Aufgabe zugrunde, einen Spike der eingangs genannten Art zu verbessern, insbesondere derart zu gestalten, dass er hinsichtlich einer flexiblen Verformung und hinsichtlich seiner Eignung zum Dämpfen von Stößen optimiert ist.

Gelöst wird die gestellte Aufgabe erfindungsgemäß dadurch, dass der Spikekörper kreiszylindrisch gestaltet ist und einen Durchmesser aufweist, welcher der Mittenbreite des Fußflansches entspricht oder von dieser Breite um bis zu 1,0 mm abweicht, wobei das Basisteil eine Höhe von 40 % bis 60 % der Spikehöhe aufweist und wobei das Verhältnis zwischen der Länge und der Breite des Pinhalters 1,10 bis 1,18 beträgt.

Der Pinhalter ist daher nahezu kreiszylindrisch ausgeführt und somit in annähernd gleicher Stärke vom Gummimaterial des kreiszylindrischen Spikekörpers umhüllt. Der Spikekörper weist durch die Anpassung seines Durchmessers an die Mittenbreite des Fußflansches des Basisteils ein großes Gummivolumen auf, wobei diese Maßnahme gemeinsam mit der Maßnahme, dass die Höhe des Basisteils maximal 60% der Spikehöhe beträgt, dafür sorgt, dass der Spikekörper sowohl den Pin als auch das Basisteil mit einer zur flexiblen Verformung und zum Dämpfen von Stößen optimalen Gummischicht umhüllt. Da eine Spaltbildung vermieden wird, erfolgt der Abrieb des Körpermaterials aus Gummi im Wesentlichen genauso schnell wie jener der umgebenden Gummimatrix, die Spikelochkanten werden keinem schneidenden Abrieb ausgesetzt. Eine Reduktion des Spikekörperdurchmessers sowie eine verstärkte Längenreduktion erfolgen bei erfindungsgemäßen Gummispikes nicht, so dass die seitlichen Haltekräfte auf hohem Niveau erhalten bleiben. Diese Effekte führen zu einer Erhaltung der Wintereigenschaften, insbesondere der "Eisperformance", des Spikes auf hohem Niveau.

Bei einer bevorzugten Ausführung des Spikes beträgt das Verhältnis zwischen der Länge und der Breite des Pinhalters des Basisteils bis 1,16. Dadurch nähert sich die äußere Gestalt des Pinhalters vorteilhafterweise noch mehr einem Kreiszylinder an.

Bevorzugt ist ferner eine Ausführung, bei der der Spikepin in Draufsicht langgestreckt gestaltet ist und derart im Pinhalter verankert ist, dass er mit seiner Längserstreckung entlang der Längserstreckung des Pinhalters verläuft. Bei der bevorzugten Orientierung des Fußflansches des Spikes im eingebauten Zustand in Umfangsrichtung des Laufstreifens ist der Spikepin mit seiner längeren Erstreckung in axialer Richtung orientiert und daher auf eisigem Untergrund besonders wirksam.

Bei einer weiteren bevorzugten Ausführung weist der Fußflansch in Draufsicht eine Länge von 7,0 mm bis 9,0 mm und eine Mittenbreite auf, die um 1,0 mm bis 2,0 mm geringer ist als seine Länge. Diese Abmessungen des Fußflansches sind für gute Haltekräfte des Spikes im Laufstreifen besonders günstig.

Bevorzugt ist ferner eine Ausführung, bei der die Länge des Pinhalters 4,0 mm bis 4,5 mm beträgt und die Breite des Pinhalters um 0,4 mm bis 0,6 mm geringer ist als seine Länge.

Der Fußflansch kann, wie erwähnt, oval oder annähernd oval ausgeführt sein. Bei einer annähernd ovalen Ausführung des Fußflansches weist dieser beispielsweise entlang seiner längeren Erstreckung gerade und parallel zueinander verlaufende oder zueinander konisch verlaufende Seitenflächen auf. Beide Ausführungen sind für eine gute Verankerung des Fußflansches im Gummimaterial des Laufstreifens von Vorteil.

Bevorzugt weist die Gummischicht am oberen Endabschnitt des Spikepins und am Fußflansch eine Stärke von 0,2 mm bis 0,5 mm auf. Eine Gummischicht dieser Stärke lässt sich, insbesondere unter Verwendung eines Haftvermittlers, gut herstellen.

Bei einer weiteren bevorzugten Ausführung weist der Fußflansch an seiner Unterseite eine 0,3 mm bis 0,5 mm tiefe Einbuchtung auf, die mit Gummimaterial befüllt ist, wobei die Unterseite des Fußflansches zumindest weitgehend eben ist. Der durch die Einbuchtung gebildete Gummipolster wirkt als Dämpfungselement bei auf den Spike beim Abrollen des Reifens wirkenden Vertikalkräften.

Die Gesamthöhe des Spikes beträgt 6,0 mm bis 20,0 mm, insbesondere 8,0 mm bis 12,0 mm.

Die Erfindung betrifft ferner einen Fahrzeugluftreifen mit einem Laufstreifen mit Spikes, welche gemäß der Erfindung ausgeführt sind, wobei die Spikes derart im Laufstreifen verankert sind, dass sich ihre Fußflansche - bezogen auf die größte Länge ihres Ovals - in Umfangsrichtung des Laufstreifens erstrecken.

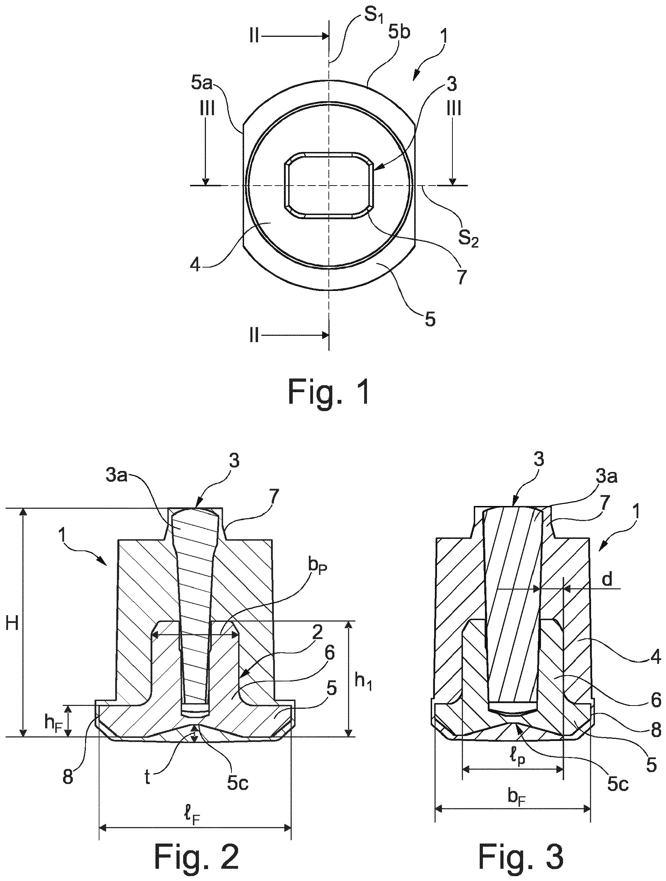

Weitere Merkmale, Vorteile und Einzelheiten der Erfindung werden nun anhand der Zeichnung, die ein Ausführungsbeispiel darstellt, näher beschrieben. Dabei zeigen
Fig. 1 eine Draufsicht auf einen Spike gemäß der Erfindung,
Fig. 2 eine Schnittdarstellung des Spikes entlang der Linie II-II der Fig. 1 und
Fig. 3 eine Schnittdarstellung des Spikes entlang der Linie III-III der Fig. 1.

Der in den Figuren gezeigte Spike 1 besteht aus einem Basisteil 2, einem Spikepin 3 und einem Spikekörper 4. Das Basisteil 2, welches insbesondere aus Aluminium besteht, weist einen Fußflansch 5 und einen mit diesem einteilig ausgeführten Pinhalter 6 auf. Das Basisteil 2 und der Spikekörper 4 sind bezüglich zweier senkrecht zueinander verlaufenden, einander entlang der zentralen Hochachse des Spikes 1 schneidenden Symmetrieebenen S₁ und S₂ symmetrisch gestaltet. Der Fußflansch 5 weist in Draufsicht eine ovale bzw. annähernd ovale Form mit zwei in der längeren Erstreckung des Ovals und parallel zur Symmetrieebene S₁ orientierten Seitenflächen 5a und zwei diese Seitenflächen 5a miteinander verbindenden, bogenförmigen Stirnflächen 5b. Entlang der Symmetrieebene S₁ weist der Fußflansch 5 daher seine größte Länge l_{F} auf, die 7,0 mm bis 9,0 mm beträgt, seine größte Breite b_{F} entspricht dem gegenseitigen Abstand der geraden Seitenflächen 5a und ist um 1,0 mm bis 2,0 mm, insbesondere bis zu 1,5 mm, geringer als seine Länge l_{F}. Der Spike 1 wird bevorzugt derart im Laufstreifen eines Fahrzeugluftreifens positioniert, dass die Seitenflächen 5a des Fußflansches 5 parallel zur Umfangsrichtung des Laufstreifens verlaufen. Bei einer alternativen, nicht dargestellten Ausführung verlaufen die Seitenflächen leicht konisch zueinander, sodass der Fußflansch an seinem einen Ende eine Breite aufweist, die um bis zu 1,0 mm größer ist als an seinem anderen Ende.

An seiner Unterseite ist der Fußflansch 5 mit einer flachen Einbuchtung 5c versehen, welche ihre größte Tiefe t_{F} von 0,3 mm bis 0,6 mm im Zentrum des Fußflansches 5 aufweist. Auf dem Fußflansch 5 befindet sich mittig der Pinhalter 6, welcher in Draufsicht ein ovaler Körper ist, in welchem mittig der Spikepin 3 gehalten ist. Der Pinhalter 6 weist in Draufsicht entlang der Symmetrieebene S₂ seine größere Erstreckung auf, seine somit entlang der Symmetrieebene S₂ vorliegende größte Länge l_{P} beträgt vorzugsweise 4,0 mm bis 4,5 mm, seine größte Breite b_{P} entlang der Symmetrieebene S₁ ist insbesondere um 0,4 mm bis 0,6 mm kleiner als seine Länge lp. Das Verhältnis zwischen der Länge und der Breite des Pinhalters 6 beträgt 1,10 bis 1,18, insbesondere bis 1,16.

Der Spikepin 3 besteht insbesondere aus einem Hartmetall, ist in Draufsicht ebenfalls länglich ausgeführt und gemäß einer bevorzugten Ausführung bezüglich der beiden Symmetrieebenen S₁ und S₂ symmetrisch gestaltet. Analog zum Pinhalter 6 weist der Spikepin 3 seine größere Erstreckung entlang der Symmetrieebene S₂ auf. Der Spikepin 3 kann in Draufsicht oval, viereckig, oder als sonstiges Polygon ausgestaltet sein und überragt in Richtung der Hochachse mit einem Endabschnitt 3a den Spikekörper 4. Bei der gezeigten Ausführung wird die Querschnittsfläche des Spikepins 3 ausgehend von seiner Außenfläche am Endabschnitt 3a in Richtung seines im Pinhalter 6 verankerten Endabschnittes kontinuierlich geringer. Der Pinhalter 6 bildet somit eine Aufnahme für den Spikepins 3 mit einer Wandstärke d, die im Bereich von 0,9 mm bis 1,2 mm beträgt.

Der Spikekörper 4 besteht aus Gummi und umgibt den Pinhalter 6 des Basisteils 2 sowie den über den Pinhalter 6 überstehenden Teil des Spikepins 3 - abgesehen vom Endabschnitt 3a - als kreiszylindrischer Körper, in welchem diese Teile eingebettet sind. Der Durchmesser D des Spikekörpers 4 entspricht bei der bevorzugten und dargestellten Ausführung der Breite b_{F} des Fußflansches 5, bei einem Fußflansch mit konisch verlaufenden Seitenflächen der Breite in der Mitte des Fußflansches, kann jedoch um bis zu 1,0 mm von dieser abweichen, insbesondere geringer sein als diese. Der Endabschnitt 3a des Spikepins 3 überragt den Spikekörper 4 um 1,3 mm ± 0,2 mm und ist jener Abschnitt des Spikepins 3 welcher bei im Laufstreifen eines Fahrzeugluftreifen positionierten Spike 1 über die Laufstreifenperipherie vorsteht und beim Abrollen des Reifens mit dem Untergrund bzw. der Straße in Kontakt kommt. Der Endabschnitt 3a des Spikepins 3 ist mit einer dünnen Gummischicht 7 des Gummimaterials des Spikekörpers 4 außenseitig umgeben, wobei die Außenfläche am Spitzenbereich des Spikepins 3 vorzugsweise keine Gummischicht aufweist.

Der Fußflansch 5 des Basisteils 2 ist von einer dünnen Gummischicht 8 des Gummimaterials des Spikekörpers 4 umschlossen bzw. umhüllt. Dabei ist die Einbuchtung 5c an der Unterseite des Fußflansches 5 mit Gummimaterial befüllt, sodass die Unterseite des Spikes 1 eine im Wesentlichen ebene Fläche bildet. Der dadurch in der Einbuchtung 5c gebildete Gummipolster wirkt als Dämpfungselement bei auf den Spike 1 beim Abrollen des Reifens wirkenden Vertikalkräften.

Die erwähnten, den Fuß flansch 5 umhüllenden und den Endabschnitt des Spikepins 3 außen umlaufenden Gummischichten 7, 8 weisen eine Dicke von insbesondere 0,2 mm bis 0,5 mm auf. Der Spike 1 ist daher an seinen sämtlichen Außenflächen, die innerhalb des Laufstreifens mit dem Gummimaterial des Laufstreifens in Kontakt kommen, von Gummimaterial ummantelt. Mittels eines gängigen Haftvermittlers für Gummimaterialen kann der Spike 1 somit besonders haltbar mit dem Gummimaterial des Laufstreifens verbunden werden.

Das bei erfindungsgemäßen Spikes optimierte, große Gummivolumen des Spikekörpers 4 verhindert besonders effektiv das Eindringen von Partikeln, wie Sand oder Split in den Bereich zwischen dem Spikekörper 4 und dem Laufstreifen. Diese Partikel befinden sich oft auf jenen Straßen bzw. jenem Untergrund, auf welchem mit Spikes versehene Reifen gefahren werden. Erfindungsgemäße Spikes behalten daher über die Lebensdauer des Reifens ihre Wirkung. Bei einer alternativen, gesondert nicht dargestellten Ausführung kann der den Pinhalter und den Spikepin umgebende, bei der gezeigten Ausführung kreiszylindrische Spikekörper mit einer Taillierung, einer ihn umlaufenden Einbuchtung, versehen sein. Die Gesamthöhe H des Spikes 1 kann von Ausführung zu Ausführung variieren und beträgt 6 mm bis 20 mm, insbesondere 8 mm bis 12 mm, besonders bevorzugt 9 mm bis 10 mm. Die Gesamthöhe h₁ des Basisteils 2 beträgt 40 % bis 60 % der Spikehöhe H, wobei der Fußflansch 5 eine Höhe h_{f} von 1,1 mm bis 1,4 mm aufweist.

### Bezugszeichenliste

- 1: Spike
- 2: Basisteil
- 3: Spikepin
- 3a: Endabschnitt
- 4: Spikekörper
- 5: Fußflansch
- 5a: Seitenfläche
- 5b: Stirnfläche
- 5c: Einbuchtung
- 6: Pinhalter
- 7, 8: Gummischicht
- b_{F}: Breite des Fußflansches
- b_{P}: Breite des Pinhalters
- D: Durchmesser des Spikekörpers
- d: Wandstärke
- H: Spikehöhe
- h₁: Höhe des Basisteils
- h_{F}: Höhe des Fußflansches
- l_{F}: Länge des Fußflansches
- l_{P}: Länge des Pinhalters
- S₁, S₂: Symmetrieebene
- t: Tiefe

## Patentansprüche

1. Spike zum Verankern in einem Spikeloch eines Laufstreifens eines Fahrzeugluftreifens, mit einem Spikekörper (4) aus Gummi, einem zumindest zum Teil innerhalb des Spikekörpers (4) befindlichen Basisteil (2) aus einem Fußflansch (5) und einem Pinhalter (6), in welchem ein Spikepin (3) verankert ist, welcher mit einem Endabschnitt (3a) den Spikekörper (4) und bei im Laufstreifen eingesetzten Spike die Laufstreifenoberfläche überragt, wobei der Endabschnitt (3a) von einer Gummischicht (7) umgeben ist und der Fußflansch (5) mit einer Gummischicht (8) umhüllt ist, wobei der Fußflansch (5) und der Pinhalter (6) jeweils Teile mit einer in Draufsicht ovalen bzw. annähernd ovalen Gestalt sind, wobei das Oval des Pinhalters (6) gegenüber dem Oval des Fußflansches (5) um 90° verdreht ist und wobei der Fußflansch (5) in Draufsicht eine Mittenbreite (b_{F}) und der Pinhalter (6) in Draufsicht eine Länge (l_{P}) und eine Breite (bp) aufweist,
**dadurch gekennzeichnet,**
**dass** der Spikekörper (4) kreiszylindrisch gestaltet ist und einen Durchmesser (D) aufweist, welcher der Mittenbreite (b_{F}) des Fußflansches (5) entspricht oder von dieser Breite (b_{F}) um bis zu 1,0 mm abweicht, wobei das Basisteil (2) eine Höhe (h₁) von 40 % bis 60 % der Spikehöhe (H) aufweist und wobei das Verhältnis zwischen der Länge (l_{P}) und der Breite (bp) des Pinhalters (6) des Basisteils (2) 1,10 bis 1,18 beträgt.

2. Spike nach Anspruch 1, **dadurch gekennzeichnet, dass** das Verhältnis zwischen der Länge (l_{P}) und der Breite (bp) des Pinhalters (6) des Basisteils (2) bis 1,16 beträgt.

3. Spike nach Anspruch 1 oder 2, **dadurch gekennzeichnet, dass** der Spikepin (3) in Draufsicht langgestreckt gestaltet ist und derart im Pinhalter (6) verankert ist, dass er mit seiner längeren Erstreckung entlang der Längserstreckung des Pinhalters (6) verläuft.

4. Spike nach einem der Ansprüche 1 bis 3, **dadurch gekennzeichnet, dass** der Fußflansch (5) in Draufsicht eine Länge (l_{F}) von 7,0 mm bis 9,0 mm aufweist.

5. Spike nach einem der Ansprüche 1 bis 4, **dadurch gekennzeichnet, dass** die Mittenbreite (b_{F}) des Fußflansches (5) um 1,0 mm bis 2,0 mm geringer ist als seine Länge (l_{F}).

6. Spike nach einem der Ansprüche 1 bis 5, **dadurch gekennzeichnet, dass** die Länge (l_{P}) des Pinhalters (6) 4,0 mm bis 4,5 mm beträgt.

7. Spike nach einem der Ansprüche 1 bis 6, **dadurch gekennzeichnet, dass** die Breite (bp) des Pinhalters (6) um 0,4 mm bis 0,6 mm geringer ist als seine Länge (lp).

8. Spike nach einem der Ansprüche 1 bis 7, **dadurch gekennzeichnet, dass** der Fußflansch (5) entlang seiner längeren Erstreckung gerade und parallel zueinander verlaufende Seitenflächen (5a) aufweist.

9. Spike nach einem der Ansprüche 1 bis 7, **dadurch gekennzeichnet, dass** der Fußflansch (5) entlang seiner längeren Erstreckung gerade und zueinander konisch verlaufende Seitenflächen (5a) aufweist.

10. Spike nach einem der Ansprüche 1 bis 9, **dadurch gekennzeichnet, dass** die Gummischicht (7, 8) am Endabschnitt (3a) des Spikepins (3) und am Fußflansch (5) eine Stärke von 0,2 mm bis 0,5 mm aufweist.

11. Spike nach einem der Ansprüche 1 bis 10, **dadurch gekennzeichnet, dass** der Fußflansch (5) an seiner Unterseite eine 0,3 mm bis 0,5 mm tiefe Einbuchtung aufweist, die mit Gummimaterial befüllt ist, wobei die Unterseite des Fußflansches (5) zumindest weitgehend eben ist.

12. Spike nach einem der Ansprüche 1 bis 11, **dadurch gekennzeichnet, dass** seine Höhe (H) 6,0 mm bis 20,0 mm, insbesondere 8,0 mm bis 12,0 mm beträgt.

13. Fahrzeugluftreifen mit einem Laufstreifen mit Spikes, welche gemäß einem oder mehreren der Ansprüche 1 bis 12 ausgeführt sind, wobei die Spikes derart im Laufstreifen verankert sind, dass sich ihre Fußflansche (5) - bezogen auf die größte Länge ihres Ovals - in Umfangsrichtung des Laufstreifens erstrecken.

## Claims

1. Spike for anchoring in a spike hole of a tread of a pneumatic vehicle tyre, having a spike body (4) composed of rubber, a base part (2), which is situated at least partially within the spike body (4) and which is composed of a bottom flange (5) and a pin holder (6), in which pin holder there is anchored a spike pin (3) which projects with an end portion (3a) beyond the spike body (4) and, when the spike is inserted in the tread, beyond the tread surface, wherein the end portion (3a) is surrounded by a rubber layer (7), and the bottom flange (5) is encased with a rubber layer (8), wherein the bottom flange (5) and the pin holder (6) are each parts with an oval or approximately oval form in plan view, wherein the oval of the pin holder (6) is rotationally offset through 90° in relation to the oval of the bottom flange (5), and wherein the bottom flange (5), in plan view, has a centre width (b_{F}) and the pin holder (6), in plan view, has a length (l_{P}) and a width (bp),
**characterized**
**in that** the spike body (4) is of circular-cylindrical design and has a diameter (D) which corresponds to the centre width (b_{F}) of the bottom flange (5) or which deviates from said width (b_{F}) by up to 1.0 mm, wherein the base part (2) has a height (h₁) of 40% to 60% of the spike height (H), and wherein the ratio between the length (l_{P}) and the width (bp) of the pin holder (6) of the base part (2) is 1.10 to 1.18.

2. Spike according to Claim 1, **characterized in that** the ratio between the length (lp) and the width (bp) of the pin holder (6) of the base part (2) is up to 1.16.

3. Spike according to Claim 1 or 2, **characterized in that** the spike pin (3) is of elongate design in plan view and is anchored in the pin holder (6) in such a way that its longer extent extends along the longitudinal extent of the pin holder (6).

4. Spike according to any one of Claims 1 to 3, **characterized in that** the bottom flange (5) has a length (I_{F}) of 7.0 mm to 9.0 mm in plan view.

5. Spike according to any one of Claims 1 to 4, **characterized in that** the centre width (b_{F}) of the bottom flange (5) is 1.0 mm to 2.0 mm less than the length (l_{F}) of said flange.

6. Spike according to any one of Claims 1 to 5, **characterized in that** the length (l_{P}) of the pin holder (6) is 4.0 mm to 4.5 mm.

7. Spike according to any one of Claims 1 to 6, **characterized in that** the width (bp) of the pin holder (6) is 0.4 mm to 0.6 mm less than the length (lp) of said pin holder.

8. Spike according to any one of Claims 1 to 7, **characterized in that** the bottom flange (5) has straight and mutually parallel side faces (5a) along the longer extent of said flange.

9. Spike according to any one of Claims 1 to 7, **characterized in that** the bottom flange (5) has straight and mutually tapered side faces (5a) along the longer extent of said flange.

10. Spike according to any one of Claims 1 to 9, **characterized in that** the rubber layer (7, 8) on the end portion (3a) of the spike pin (3) and on the bottom flange (5) has a thickness of 0.2 mm to 0.5 mm.

11. Spike according to any one of Claims 1 to 10, **characterized in that** the bottom flange (5) has, on the underside thereof, a recess with a depth of 0.3 mm to 0.5 mm, which is filled with rubber material, wherein the underside of the bottom flange (5) is at least largely flat.

12. Spike according to any one of Claims 1 to 11, **characterized in that** the height (H) of said spike is 6.0 mm to 20.0 mm, in particular 8.0 mm to 12.0 mm.

13. Pneumatic vehicle tyre having a tread with spikes that are embodied in accordance with one or more of Claims 1 to 12, wherein the spikes are anchored in the tread in such a way that the bottom flanges (5) of said spikes - in relation to the largest length of the oval of said flange - extend in the circumferential direction of the tread.

## Revendications

1. Crampon destiné à venir s'ancrer dans un trou de crampon d'une bande de roulement d'un pneumatique de véhicule automobile, ledit crampon comprenant un corps de crampon (4) en caoutchouc, une partie de base (2) située au moins partiellement à l'intérieur du corps de crampon (4) et comprenant une collerette de base (5) et un support de broche (6) dans lequel est ancrée une broche de crampon (3) dont la portion d'extrémité (3a) fait saillie du corps de crampon (4) et, lorsque le crampon est inséré dans la bande de roulement de la surface de la bande de roulement, la portion d'extrémité (3a) étant enrobée d'une couche de caoutchouc (7) et la collerette de base (5) étant enrobée d'une couche de caoutchouc (8), la collerette de base (5) et le support de broche (6) étant chacun des parties de forme ovale ou à peu près ovale dans une vue de dessus, l'ovale du support de broche (6) étant tourné de 90° par rapport à l'ovale de la collerette de base (5) et la collerette de base (5) ayant une largeur centrale (b_{F}) dans une vue de dessus et le support de broche (6) ayant une longueur (l_{P}) et une largeur (b_{P}) dans une vue de dessus,
**caractérisé en ce que**
le corps de crampon (4) a une forme de cylindre circulaire et a un diamètre (D) qui correspond à la largeur centrale (b_{F}) de la collerette de base (5) ou qui s'écarte de cette largeur (b_{F}) d'une valeur pouvant atteindre 1,0 mm, la partie de base (2) ayant une hauteur (h₁) de 40 % à 60 % de la hauteur de crampon (H) et le rapport entre la longueur (l_{P}) et la largeur (b_{P}) du support de broche (6) de la partie de base (2) étant de 1,10 à 1,18.

2. Crampon selon la revendication 1, **caractérisé en ce que** le rapport entre la longueur (l_{P}) et la largeur (b_{P}) du support de broche (6) de la partie de base (2) peut atteindre 1,16.

3. Crampon selon la revendication 1 ou 2, **caractérisé en ce que** le crampon (3) a une forme allongée dans une vue de dessus et est ancré dans le support de broche (6) de telle sorte que son extension la plus longue va le long de l'extension longitudinale du support de broche (6).

4. Crampon selon l'une des revendications 1 à 3, **caractérisé en ce que** la collerette de base (5) a une longueur (l_{F}) de 7,0 mm à 9,0 mm dans une vue de dessus.

5. Crampon selon l'une des revendications 1 à 4, **caractérisé en ce que** la largeur centrale (b_{F}) de la collerette de base (5) est inférieure de 1,0 mm à 2,0 mm à sa longueur (l_{P}).

6. Crampon selon l'une des revendications 1 à 5, **caractérisé en ce que** la longueur (l_{P}) du support de broche (6) est de 4,0 mm à 4,5 mm.

7. Crampon selon l'une des revendications 1 à 6, **caractérisé en ce que** la largeur (b_{P}) du support de broche (6) est inférieure de 0,4 mm à 0,6 mm à sa longueur (l_{P}).

8. Crampon selon l'une des revendications 1 à 7, **caractérisé en ce que** la collerette de base (5) comporte, le long de son extension la plus longue, des surfaces latérales (5a) droites et parallèles entre elles.

9. Crampon selon l'une des revendications 1 à 7, **caractérisé en ce que** le support de pied (5) comporte le long de son extension la plus longue, des surfaces latérales (5a) droites et s'étendant en cône.

10. Crampon selon l'une des revendications 1 à 9, **caractérisé en ce que** la couche de caoutchouc (7, 8) a une épaisseur de 0,2 mm à 0,5 mm au niveau de la portion d'extrémité (3a) de la broche de crampon (3) et au niveau de la collerette de base (5).

11. Crampon selon l'une des revendications 1 à 10, **caractérisé en ce que** la collerette de base (5) comporte sur son côté inférieur un creux de 0,3 mm à 0,5 mm de profondeur qui est rempli de matière caoutchouteuse, le côté inférieur de la collerette de base (5) étant au moins dans une large mesure plan.

12. Crampon selon l'une des revendications 1 à 11, **caractérisé en ce que** sa hauteur (H) est de 6,0 mm à 20,0 mm, en particulier de 8,0 mm à 12,0 mm.

13. Pneumatique de véhicule comprenant une bande de roulement pourvue de crampons, qui sont conçus selon une ou plusieurs des revendications 1 à 12, les crampons étant ancrés dans la bande de roulement de telle sorte que leurs rebords de pied (5) s'étendent, sur la base de la plus grande longueur de leur ovale, dans la direction circonférentielle de la bande de roulement.
